# DEMANDE DE BREVET EUROPEEN

(11) **EP 1 001 560 A1**
(43) Date de publication de la demande: **17.05.2000**
(21) Numéro de dépôt: 99402680.5
(22) Date de dépôt: 28.10.1999
(51) Int. Cl.: H04B 7/216, H04B 7/26

(54) **Synchronisation dans un système de télécommunications en acces multiple à division par codes**

(30) Priorité: 09.11.1998 FR 9814053
(71) Demandeur: ALCATEL, 75008 Paris (FR)
(72) Inventeur: Sehier, Philippe, 78100 Saint Germain en Laye (FR); Cueff, Valérie, 75007 Paris (FR)
(74) Mandataire: Lamoureux, Bernard

(57) **Abrégé**

L'invention concerne un système de télécommunications numériques en accès multiple à division par codes, dans lequel, dans le sens multipoint à point les symboles de référence destinés à la synchronisation sont émis sur un code distinct des symboles de données émis.

Les symboles de référence sont moins sensibles à l'évanouissement, dans la mesure où ils peuvent être transmis sur une durée plus importante. En outre, ils peuvent être émis à une puissance inférieure à celle des symboles de données. De la sorte, et notamment dans le cas de système satellitaires, l'invention permet d'améliorer le bilan énergétique de la liaison.

## Description

La présente invention concerne le domaine des systèmes de télécommunications numériques par voie herztienne ou radiocommunications, en accès multiple à division par codes.

Dans de tels systèmes de télécommunications se pose notamment le problème de la synchronisation en phase et en fréquence des stations. Les horloges des stations peuvent en effet présenter des dérives relatives, et il est nécessaire pour chaque station de déterminer l'écart en fréquence et la phase des signaux qu'elle reçoit. M. Morelli et U. Mengali, Feedforward Frequency Estimation for PSK: a Tutorial Review, ETT vol. 9 n° 2 Mars-Avril 1998 contient une description du problème de la synchronisation des démodulateurs pour des systèmes de transmissions numérique à transmission en mode paquet par modulation de phase. Ce document décrit en outre les solutions connues à ce problème.

Ce problème de la démodulation de signaux numériques modulés en phase et transmis en mode paquets se pose notamment pour les systèmes de transmission par satellites ou terrestre en accès multiple à division par codes (CDMA, de l'anglais "code division multiplexing access"). Les techniques de CDMA sont par exemple décrites dons M.K. Simon et autres, Spread spectrum communications, Computer Sciences Press, 1988. Dans un tel système, différentes voies logiques sont définies sur un même canal physique de transmission à l'aide de différents codes orthogonaux, tels que des codes de Walsh ou des codes de Hadamard. Les symboles destinés à une voie logiques sont ainsi décomposés en bribes ou en anglais "chips". Les chips des différentes voies logiques sont superposées.

Dans le système de télécommunications numériques Globalstar, ou dans le système IS95, on utilise pour la synchronisation sur la voie aller - i.e. depuis la station de base ou "gateway" vers les différentes stations, ou point à multipoint - une des voies logiques, i.e. un des codes, pour la synchronisation des différentes stations. La voie logique est utilisée par les stations pour la synchronisation en phase et en fréquence.

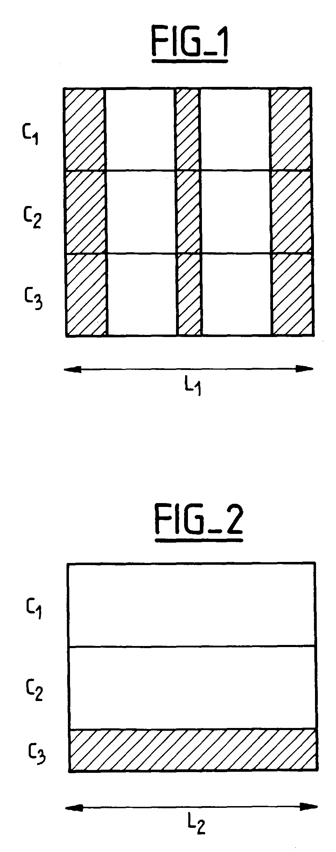

Sur la voie retour, dans le sens multipoint à point il est connu d'incorporer au contenu des paquets envoyés par les différentes stations des symboles de référence. Ces symboles peuvent être des symboles d'en-tête, des symboles dans le corps du paquet ou des symboles en queue de paquet. La figure 1 montre une représentation schématique des paquets émis par des stations. Chaque ligne représente une voie logique ou un code, C₁ à C₃ dans l'exemple de la figure; les symboles de référence servant pour la synchronisation sont représentés sur la figure en hachurés. Chaque paquet a une longueur L₁. On a porté sur la figure le cas où les symboles de référence sont répartis dans chaque paquet au début, au milieu et à la fin du paquet.

Cette solution pose les problèmes suivants. D'une part, les symboles de référence rallongent les paquets transmis, ou, de façon équivalente, l'insertion de symboles de référence dans les paquets diminue le débit utile. D'autre part, les symboles de référence peuvent être mal reçus ou être reçus trop faiblement, ce qui nuit à la qualité de la synchronisation.

L'invention propose une solution au problème de la synchronisation dans le sens multipoint à point dans un système de télécommunications numériques en accès multiple à division par codes. L'invention évite la diminution de débit de la solution de l'art antérieur; elle assure en outre que la synchronisation en phase et en fréquence est plus résistante, et est obtenue avec une consommation énergétique plus faible.

Plus précisément, l'invention propose un système de télécommunications numériques en accès multiple à division par codes, dans lequel, dans le sens multipoint à point les symboles de référence destinés à la synchronisation sont émis sur un code distinct des symboles de données émis.

Dans un mode de réalisation, les symboles de données et les symboles de référence sont émis simultanément.

Avantageusement, les symboles de référence sont émis à une puissance inférieure à celle des symboles de données.

Dans un mode de réalisation, les symboles de données comme des symboles de référence sont émis sous la forme de paquets, et les symboles de référence sont émis sur toute la longueur d'un paquet.

L'invention concerne aussi un procédé de transmission de données numériques en accès multiple à division par codes, dans le sens multipoint à point dans un système de télécommunications, comprenant l'émission des symboles de référence destinés à la synchronisation sur un code distinct des symboles de données émis.

Avantageusement, les symboles de données et les symboles de référence sont émis simultanément.

De préférence, les symboles de référence sont émis à une puissance inférieure à celle des symboles de données.

Dans un mode de réalisation, les symboles de données comme des symboles de référence sont émis sous la forme de paquets, et les symboles de référence sont émis sur toute la longueur d'un paquet.

D'autres caractéristiques et avantages de l'invention apparaîtront à la lecture de la description qui suit de modes de réalisation de l'invention, donnée à titre d'exemple et en référence aux dessins annexés, qui montrent
- figure 1, des paquets émis dans un système de télécommunications connu;
- figure 2, des paquets émis selon l'invention.

L'invention propose, dans le sens multipoint à point dans un système de télécommunications numériques en CDMA, d'étaler les symboles de référence à l'aide d'une séquence d'étalement ou d'un code différent de celui qui est utilisé pour la transmission des données. Dans la suite de la description, on donne un exemple dans le cas d'un système de télécommunications par satellites, qui utilise 80 codes de Hadamard pour l'étalement, et une modulation MPSK (acronyme de l'anglais "multiple phase shift keying", ou codage multiple par décalage en phase).

Dans le sens point à multipoint, i.e. depuis la station de base vers les différents mobiles, le système utilise un des codes de Hadamard pour la synchronisation; ceci laisse 79 canaux logiques disponibles pour la transmission des données.

Dans le sens multipoint à point i.e. depuis des différents mobiles vers la station de base, l'invention propose que les symboles de référence soient émis par chaque station avec une séquence d'étalement distincte des données, comme représenté sur la figure 2.

La figure 2 montre comme dans la figure 1 les différents codes qui peuvent être utilisés pour la transmission; l'invention propose que les symboles de référence soient envoyés sur un code distinct des données. Dans l'exemple de la figure 2, la station utilise les codes C₁ et C₂ pour la transmission de données. Le code C₃ est utilisé pour la transmission des symboles de référence pour la synchronisation. La longueur d'un paquet dans le mode de réalisation de la figure de L₂, par exemple 440 symboles. Les symboles de référence sont de préférence, comme le montre la figure, envoyés sur toute la longueur du paquet, i.e. sur toute la longueur L₂. Ceci permet un synchronisation qui est moins sensible à l'évanouissement, et aux perturbations de la transmission sur le canal physique.

La longueur L₂ peut être inférieure à la longueur L₁ de l'art antérieur pour un même débit utile d'informations transmises.

En outre, l'invention propose que les symboles de référence soient émis sur le canal choisi à une puissance moins forte que les symboles de données. Du fait que les symboles de synchronisation sont émis pendant toute la durée des paquets, on peut assurer la synchronisation avec une consommation énergétique plus faible que dans l'art antérieur. Ceci est particulièrement avantageux dans le cas de systèmes de transmission par satellite, car la consommation d'énergie pour la synchronisation sur le segment spatial décroît. L'invention permet, par rapport à l'art antérieur, un gain sur le bilan de liaison du satellite.

On notera en outre que l'invention permet une obtention de la synchronisation plus simple et plus rapide que dans les solutions de l'art antérieur; en effet, elle rend inutile la recherche de mots parmi les symboles de données; il suffit de décoder le canal choisi pour les symboles de référence pour obtenir la synchronisation, sur des symboles connus.

L'émission des symboles de référence sur un canal distinct est d'autant plus efficace qu'une station utilise un nombre de codes importants. De fait, une station qui utilise pour la transmission de données des codes ou canaux logiques différents peut utiliser pour l'ensemble des codes un canal de synchronisation unique. L'invention est donc particulièrement adaptée à des débits importants, et à des systèmes à superposition de codes sur la voie retour.

L'invention conduit à une consommation de codes plus importante que dans l'art antérieur; ainsi, dans un système du type de celui pris à titre d'exemple, avec 80 codes, on peut assurer simultanément 40 communications dans le sens multipoint à point chaque communication utilisant un code pour la transmission des données et un code pour la transmission des symboles de référence pour la synchronisation. Ceci ne constitue pas un inconvénient, notamment dans le cas de systèmes satellitaires où le fadeur dirimant est le bilan énergétique de la liaison plus que le nombre de codes utilisés.

Bien entendu, la présente invention n'est pas limitée aux exemples et modes de réalisation décrits et représentés, mais elle est susceptible de nombreuses variantes accessibles à l'homme de l'art. En particulier, elle s'applique non seulement à des systèmes de télécommunications par satellites, mais aussi à des systèmes de télécommunications terrestres. L'invention a été décrite dans le cas d'une modulation MPSK donnée à titre d'exemple. Elle s'applique aussi à d'autres modulations en phase ou en amplitude. Elle s'applique aussi à tous les types de codes orthogonaux, et pas seulement aux codes de Hadamard mentionnés plus haut.

## Revendications

1. Un système de télécommunications numériques en accès multiple à division par codes, dans lequel, dans le sens multipoint à point, les symboles de référence destinés à la synchronisation sont émis sur un code distinct des symboles de données émis.

2. Le système de la revendication 1, caractérisé en ce que les symboles de données et les symboles de référence sont émis simultanément.

3. Le système de la revendication 1 ou 2, caractérisé en ce que les symboles de référence sont émis à une puissance inférieure à celle des symboles de données.

4. Le système de la revendication 1, 2 ou 3, caractérisé en ce que les symboles de données comme des symboles de référence sont émis sous la forme de paquets, et en ce que les symboles de référence sont émis sur toute la longueur d'un paquet.

5. Un procédé de transmission de données numériques en accès multiple à division par codes, dans le sens multipoint à point dans un système de télécommunications, comprenant l'émission des symboles de référence destinés à la synchronisation sur un code distinct des symboles de données émis.

6. Le procédé de la revendication 5, caractérisé en ce que les symboles de données et les symboles de référence sont émis simultanément.

7. Le procédé de la revendication 5 ou 6, caractérisé en ce que les symboles de référence sont émis à une puissance inférieure à celle des symboles de données.

8. Le procédé de la revendication 5, 6 ou 7, caractérisé en ce que les symboles de données comme des symboles de référence sont émis sous la forme de paquets, et en ce que les symboles de référence sont émis sur toute la longueur d'un paquet.
